# EUROPEAN PATENT APPLICATION

(11) **EP 4 847 813 A1**
(43) Date of publication of application: **02.12.2026**
(21) Application number: 26175322.2
(22) Date of filing: 29.04.2026
(51) Int. Cl.: F16K 31/06, F16K 27/02, F16K 31/40

(54) **A SOLENOID VALVE AND A SHOCK ABSORBER HAVING THE SOLENOID VALVE**

(30) Priority: 28.05.2025 CN 202521066678 U
(71) Applicant: Johnson Electric Motion Technology (Changzhou) Co. Ltd., Changzhou, Jiangsu 213166 (CN)
(72) Inventor: DABHADE, Kiran V., Hong Kong (CN); WANG, Jingxuan, Changzhou (CN); BOUWMEESTER, Luke, Toronto (CA); MORTON, Paul, Oakville (CA); GU, Minjun, Changzhou (CN)
(74) Representative: Doherty, William

(57) **Abstract**

The invention relates to a solenoid valve and a shock absorber, which can simplify the structure of the solenoid valve. The solenoid valve includes a movable spool (31), a pin (33) capable of axial reciprocating motion with the movable spool (31), the pin (33) includes a rod (35) which is disposed axially and a pin head (34) extending from the rod (35); the rod includes a tail end (35b) and a head end (35a), the pin head (34) includes a pressurizing portion (39a) whose outer diameter gradually increases along the axial direction from where it continues from the head end of rod (35); a valve housing (70) accommodating the pin head (34), the valve housing (70) includes an axial end plate (71) which includes a through hole (72) extending axially and penetrates the axial end plate (71), and for allowing the rod (35) to pass through; an inner wall (72a) defining the through hole (72) and having a diameter less than or equal to the maximum outer diameter of the pressurizing portion (39a), and an auxiliary groove (72b) formed on the inner wall (72a) and communicating with the through hole (72) to allow the working fluid to flow between the pressurizing portion (39a) and the axial end plate (71) when the pressurizing portion (39a) is in contact with the axial end plate (71).

## Description

### TECHNICAL FIELD

The present application relates to a solenoid valve and a shock absorber having the solenoid valve, and in particular to a CDC(Continuous Damping Control) solenoid valve and a CDC shock absorber having the CDC solenoid valve.

### BACKGROUND

The CDC solenoid valve of an automobile realizes continuous damping control by adjusting, at a high frequency, the pressure of the working fluid inside a CDC shock absorber, so that when the automobile is running, continuous damping control can be carried out in a timely manner according to vehicle speed, road conditions, etc., thereby improving the running stability, comfort, and safety of the automobile. At present, the solenoid valve includes a valve housing with groove formed on its end face, a pilot valve seat fixed inside the valve housing, a pilot valve core that is slidably accommodated at one end of the valve housing, a movable spool arranged outside the valve housing and capable of axial reciprocating motion, and a plunger connected to the movable spool and moveable with the movable spool to drive the pilot valve core to press against the pilot valve seat. The pilot valve core has a porous structure. Specifically, a plurality of through holes penetrating in the axial direction are formed in the pilot valve core, allowing the working fluid to flow through the through holes toward the groove, thereby producing a damping effect. However, the solenoid valve includes a relatively large number of components, which makes the structure of the solenoid valve complicated.

### SUMMARY

The present application provides a solenoid valve and a shock absorber having the solenoid valve, which can simplify the structure of the solenoid valve.

Therefore, the first aspect of the present application provides a solenoid valve comprising a movable spool capable of axial reciprocating motion and a frist elastic element for resetting the movable spool when the solenoid valve is not energized, characterized in that the solenoid valve further comprises: a pin connected to the movable spool, capable of axial reciprocating motion with the movable spool, and having the function of a valve core, the pin comprises a rod which is disposed in the axial direction and a pin head extending from the rod; the rod comprises a tail end connected to the movable spool, and a head end connected to the pin head, the pin head comprises a pressurizing portion whose outer diameter gradually increases along the axial direction from where it continues from the head end of rod; and a valve housing with one axial end open and the other axial end closed and accommodating the pin head, the valve housing comprises an axial end plate, the axial end plate comprises a through hole extending axially and penetrates the axial end plate, and for allowing the rod to pass through; an inner wall defining the through hole and having a diameter less than or equal to the maximum outer diameter of the pressurizing portion, and an auxiliary groove formed on the inner wall and extending axially through the axial end plate and communicating with the through hole to allow the working fluid to flow between the pressurizing portion and the axial end plate when the pressurizing portion is in contact with the axial end plate.

The solenoid valve may have one or more of the following characteristics, alone or in combination.

In some embodiments, the cross section of the auxiliary groove is arc-shaped, rectangular or polygonal.

In some embodiments, the axial end plate further comprises a first end face and a second end face opposite to the first end face, the first end face is closer to the movable spool than the second end face, the axial end plate further comprises a first cavity which is formed by axially recessing from the first end face and surrounds the through hole and the auxiliary groove, the first cavity is in communication with the through hole and the auxiliary groove.

In some embodiments, the valve housing further comprises a ring wall extending axially from an edge of the axial end plate, and the axial end plate further comprises a second cavity extending radially outward from the first end face and a third cavity extending axially along an outer peripheral surface of the ring wall, the second cavity is in communication with the first cavity, and the third cavity is in communication with the second cavity.

In some embodiments, the diameter of the head end of the rod is smaller than the diameter of the tail end of the rod, and the axial length of the head end of the rod is greater than the axial length of the inner wall.

In some embodiments, the solenoid valve further comprises a valve member with a valve-seat function accommodated in the valve housing, the valve member comprises a cap body, which has an open end and accommodates the pin head, and a brim which extends radially outward around the opening of the cap body and is continuous with the cap body, the opening of the cap body facing the through hole; and solenoid valve further comprises a second elastic element which abuts against the brim in a compressed state, so that the brim is axially pressed against the axial end plate.

In some embodiments, the force applied by the second elastic element to the brim is greater than the force applied by the pin to the valve member when the solenoid valve is powered on.

In some embodiments, the solenoid valve further comprises a connection part which is continuous with the pressurizing portion and has a reduced outer diameter from the continuation of the pressurizing portion, the pressurizing portion forms a shoulder at the connection position between the pressurizing portion and the connection part, two ends of the first elastic element respectively abut against the shoulder and the valve member, and the force applied by the first elastic element to the valve member is smaller than the force applied by the second elastic element to the brim.

In some embodiments, the solenoid valve further comprises a sealing element, and the valve housing further comprises an annular limiting portion that extends axially from the axial end plate, is accommodated in the cap body, and abuts against the cap body in a sealed state via the sealing element; the limiting portion and the cap body together form an accommodating space for accommodating the pin head.

The second aspect of the present application provides a shock absorber comprising the solenoid valve provided in the first aspect of the present application.

In the solenoid valve of the present application, the pin connected to the movable spool serves as a valve core. By virtue of the through hole formed in the axial end plate of the valve housing for accommodating the rod of the pin, the auxiliary groove and the pressurizing portion that is accommodated in the valve housing and has an outer diameter that gradually increases along the axial direction from where it continues from the rod, the working fluid can still flow between the pressurizing portion and the axial end plate when the pressurizing portion is in contact with the axial end plate. Thus, the flow rate and speed of the working fluid can be controlled with a smaller through hole formed in the valve housing and with fewer components in the solenoid valve, thereby simplifying the structure of the solenoid valve.

### BRIEF DESCRIPTION OF THE DRAWINGS

In order to more clearly illustrate the technical solutions of the embodiments of the present application, the drawings required for use in the embodiments of the present application will be briefly introduced below. Obviously, the drawings described below are only some embodiments of the present application. For those skilled in the art, other drawings can be obtained based on these drawings without creative effort.
[Fig.1] is a perspective schematic diagram of the solenoid valve in the present application;
[Fig.2] is perspective schematic diagram of the solenoid valve shown in Fig. 1;
[Fig.3] is a schematic sectional diagram taken along line A-A of the solenoid valve shown in Fig. 2;
[Fig.4] is a schematic diagram of partial components of the solenoid valve shown in Fig. 1, showing the valve sleeve, pin, sealing element, and valve member;
[Fig.5] is an exploded diagram of the assembly shown in Fig. 4;
[Fig.6] is a schematic diagram showing the assembly of the component shown in Fig. 4 onto the valve housing;
[Fig.7] is a schematic diagram of an angle of the valve housing shown in Fig. 6;
[Fig.8] is a schematic diagram of another angle of the valve housing shown in Fig. 6.

### DETAILED DESCRIPTION

In order to facilitate the understanding of the present application, the present application is described in more detail below in conjunction with the accompanying drawings and specific embodiments. Obviously, the described embodiments are only some embodiments of the present application, and not all embodiments.

It should be noted that when an element is described as being "fixed to" another element, it may be directly on the other element, or one or more intervening elements may be present therebetween. When an element is said to be "connected to" another element, it can be directly connected to the other element, or one or more intervening elements may be present therebetween. The terms "vertical", "horizontal", "left", "right" and the like are used in this specification for illustrative purposes only and do not represent the only possible implementation.

Unless otherwise defined, all technical and scientific terms used in this specification have the same meanings as commonly understood by one of ordinary skill in the art to which this application belongs. The terms used in this specification and in the specification of this application are only for the purpose of describing specific embodiments and are not intended to limit this application. The term "and/or" used in this specification includes any and all combinations of one or more of the associated listed items.

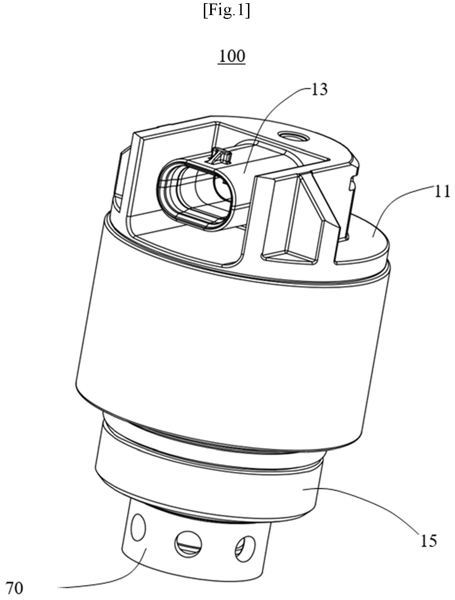

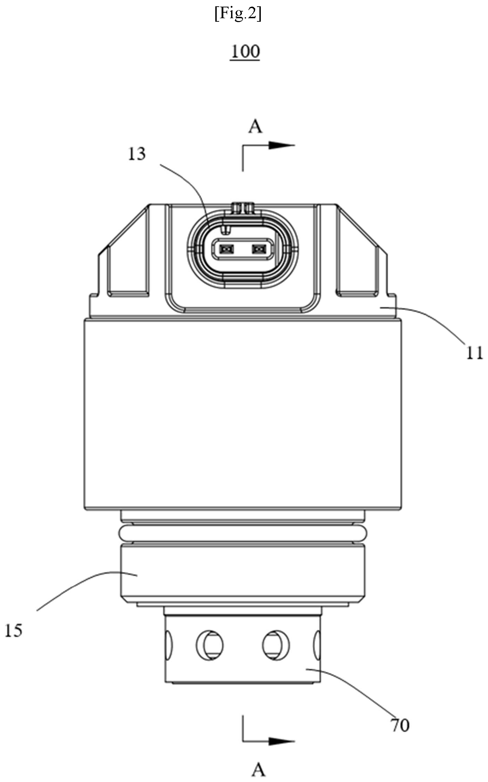

Referring to Figures 1 and 2, a solenoid valve 100 provided in one embodiment of the present application includes a shell 11, a connector 13 fixed to one end of the shell 11, a cover 15 fixed to the other end of the shell 11. The housing 11 is equipped with a movable spool (not shown in Figure 1). The connector 13 is used to connect with an external power source. In this embodiment, one end of the cover 15 is fixed to the other end of the shell 11.

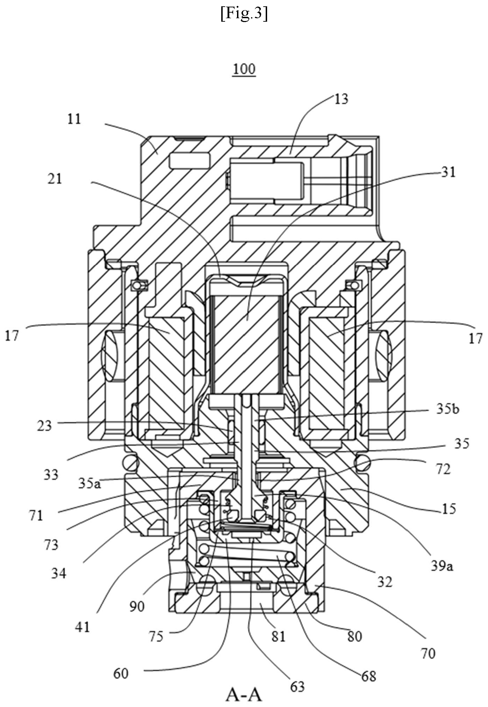

Referring to Figure 3, the solenoid valve 100 includes a coil 17 fixed inside the shell 11 and a valve sleeve 21 fixed within the shell 11. The coil 17 is electrically connected to the terminals installed inside the connector 13. When the solenoid valve 100 is powered on, the coil 17 is connected to an external power source through the connector 13 and generates a magnetic field.

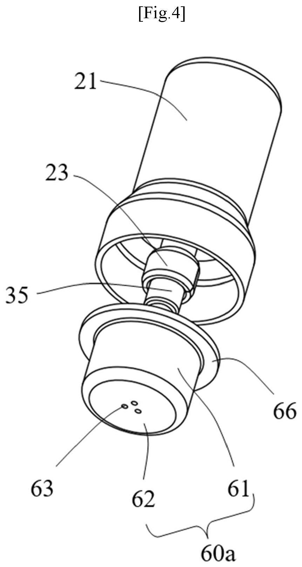

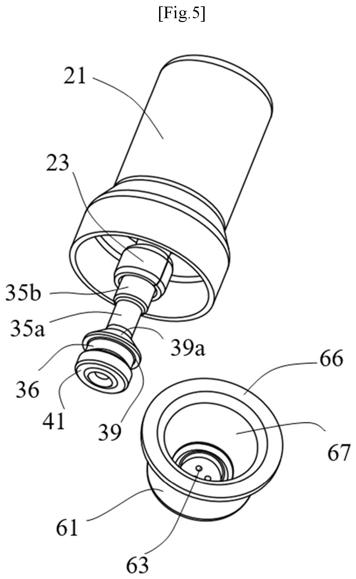

Referring to Figures 3, 4, and 5, the solenoid valve 100 further comprises a movable spool 31 capable of axial reciprocating motion and a first elastic element 32 for resetting the movable spool 31 when the solenoid valve is not energized, and a pin 33 connected to the movable spool 31, capable of axial reciprocating motion with the movable spool 31, and having the function of a valve core. The movable spool 31 is housed inside the valve sleeve 21 and can be driven by the magnetic field generated by the coil 17 to perform axial movement within the valve sleeve 21. One end of the first elastic element 32 is pressed against the pin 33. In this embodiment, the first elastic element 32 is a conical coil spring or a cylindrical coil spring.

The pin 33 comprises a rod 35 which is disposed in the axial direction and a pin head 34 extending from the rod. The rod 35 of the pin 33 passes through the cover 15 and is supported by a bushing 23 installed in the cover 15 for axial movement. The rod 35 comprises a tail end 35b connected to the movable spool 31, and a head end 35a connected to the pin head 34. In this embodiment, the diameter of the head end 35a of the rod 35 is smaller than the diameter of the tail end 35b of the rod 35.

The pin head 34 comprises a pressurizing portion 39a whose outer diameter gradually increases along the axial direction from where it continues from the head end 35a of rod 35. The pin head 34 also includes a shoulder 39 formed by a continuation of the pressurizing portion 39a with a reduced outer diameter. In this embodiment, the pin head 34 further includes a connection part 36, which continues from the pressurizing portion 39a with a reduced outer diameter, and the shoulder 39 is formed at the connection position between the connection part 36 with the pressurizing portion 39a. In this embodiment, one end of the first elastic element 32 is pressed against the shoulder 39.

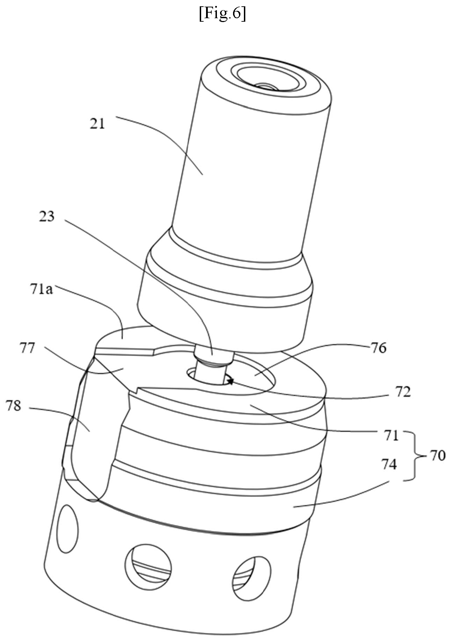

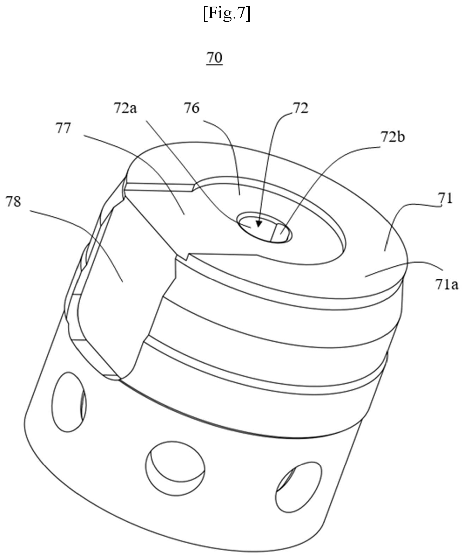

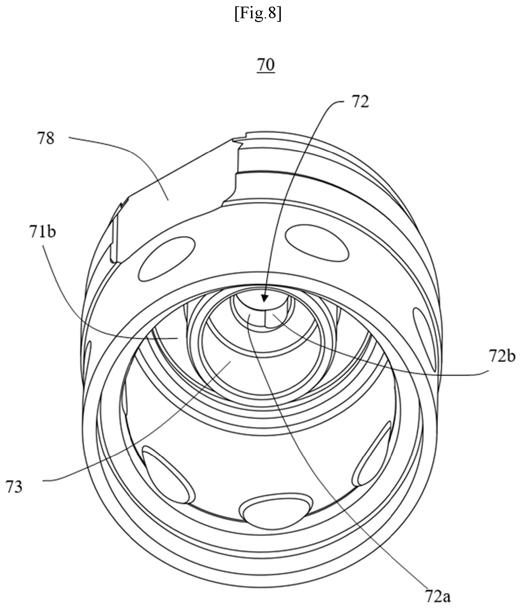

Referring to Figures 3, 6, 7, and 8, the solenoid valve 100 further comprises a valve housing 70 that accommodates the pin head 34. In this embodiment, the valve housing 70 has one axial end open and the other axial end closed. The valve housing 70 is inserted into the other end of the cover 15. In this embodiment, the valve housing 70 also houses the first elastic member 32.

The valve housing 70 comprises an axial end plate 71. In this embodiment, the axial end plate 71 is provided at the closed axial end of the valve housing 70. The axial end plate 71 comprises a through hole 72 extending axially and penetrates the axial end plate 71, and for allowing the rod 35 to pass through. An inner wall 72a defining the through hole 72 and having a diameter less than or equal to the maximum outer diameter of the pressurizing portion 39a, and an auxiliary groove 72b formed on the inner wall 72a and extending axially through the axial end plate 71 and communicating with the through hole 72 to allow the working fluid to flow between the pressurizing portion 39a and the axial end plate 71 when the pressurizing portion 39a is in contact with the axial end plate 71. In this embodiment, the length of the inner wall 72a along the axial direction is less than the length of the head end 35a of the rod 35 along the axial direction. Since the diameter of the head end 35a of the rod 35 is smaller than the diameter of the tail end 35b of the rod 35, and the axial length of the head end 35a of the rod 35 is greater than the axial length of the inner wall 72a, the interference between the pin 33 and the axial end plate 71 of the valve housing 70 is reduced, allowing the pin 33 and the movable spool 31 to have a larger axial movement range. In this embodiment, the cross section of the auxiliary groove 72b can be arc-shaped, rectangular or polygonal. It can be understood that the cross section of the auxiliary groove 72b can also be other shapes, this application does not limit this.

The axial end plate 71 further comprises a first end face 71a and a second end face 71b opposite to the first end face 71a, the first end face 71a is closer to the movable spool 31 than the second end face 71b, the axial end plate 71 further comprises a first cavity 76 which is formed by axially recessing from the first end face 71a and surrounds the through hole 72 and the auxiliary groove 72b, the first cavity 76 is in communication with the through hole 72 and the auxiliary groove 72b. In this embodiment, the inner diameter of the first cavity 76 is greater than the inner diameter of the through hole 72. Thus, when the intensity of pressure at the open axial end of the valve housing 70 increases, the working fluid flowing out from the through hole 72 and/or the auxiliary groove 72b can flow into the first cavity 76, which has a lager volume, thereby preventing the increased intensity of pressure from causing damage to or deformation of the axial end plate 71 and the cover 15.

In this embodiment, the valve housing 70 further comprises a ring wall 74 extending axially from an edge of the axial end plate 71, and the axial end plate 71 further comprises a second cavity 77 extending radially outward from the first end face 71a and a third cavity 78 extending axially along an outer peripheral surface of the ring wall 74, the second cavity 77 is in communication with the first cavity 76, and the third cavity 78 is in communication with the second cavity 77. In this embodiment, the third cavity 78 extends out of the cover body 15. In this way, after the working fluid flows into the valve housing 70 from the open axial end of the valve housing 70 and then flows out of the valve housing 70 through the through hole 72 and/or the auxiliary groove 72b, it can sequentially flow through the first cavity 76, the second cavity 77, and the third cavity 78 to flow out of the solenoid valve 100.

In the solenoid valve of the present application, the pin 33 connected to the movable spool 31 serves as a valve core. By virtue of the through hole 72 formed in the axial end plate 71 of the valve housing 70 for accommodating the rod 35 of the pin 33, the auxiliary groove 72b and the pressurizing portion 39a that is accommodated in the valve housing 70 and has an outer diameter that gradually increases along the axial direction from where it continues from the rod 35, the working fluid can still flow between the pressurizing portion 39a and the axial end plate 71 when the pressurizing portion 39a is in contact with the axial end plate 71. Thus, the flow rate and speed of the working fluid can be controlled with a smaller through hole formed in the valve housing 70 and with fewer components in the solenoid valve 100, thereby simplifying the structure of the solenoid valve 100.

Referring to Figures 3, 4, and 5, the solenoid valve 100 further includes a sealing gasket 41 fixed to the pin head 34. The sealing gasket 41 has an annular structure and protrudes radially outward from the connection part 34a. When the first elastic element 32 abuts against the shoulder 39, the first elastic element 32 surrounds the outside of the sealing gasket 41.

The solenoid valve 100 further includes a valve member 60 with a valve seat function accommodated in the valve housing 70, and a second elastic element 68 that abuts against the valve member 60 in a compressed state. In this embodiment, the valve member 60 has a cap-shaped structure. A fluid-passing hole 63 is formed on the valve member 60. The fluid-passing hole 63 can be blocked by the sealing gasket 41. In this embodiment, the other end of the first elastic element 32 is pressed against the valve member 60, that is, the two ends of the first elastic element 32 respectively abut against the shoulder 39 and the valve member 60.

The valve member 60 comprises a cap body 60a, which has an open end and accommodates the pin head 34, and a brim 66 which extends radially outward around the opening of the cap body 60a and is continuous with the cap body 60a. The opening of the cap body 60a faces the through hole 72. In this embodiment, the opening of the cap body 60a also faces away the fluid-passing hole 63. The cap body 60a includes an accommodating chamber 67 with an open end, and the first elastic element 32 and the pin head 34 are accommodated in the accommodating chamber 67. The cap body 60a includes an annular wall 61 and a connection plate 62 connected to one axial end of the annular wall 61. The annular wall 61 and the connection plate 62 together form the accommodating chamber 67. The fluid-passing hole 63 is provided on the connection plate 62 and extends through the connection plate 62 along the axial direction. In this embodiment, the two ends of the first elastic element 32 respectively abut against the connection plate 62 and the shoulder 39.

In this embodiment, the second elastic element 68 is pressed against the brim 66 in a compressed state, so that the brim 66 is pressed against the axial end plate 71. The force applied by the second elastic element 68 to the brim 66 is greater than the force applied by the first elastic element 32 to the valve member 60 when the solenoid valve 100 is not energized. Therefore, when the solenoid valve 100 is not powered, the valve member 60 can be confined within the valve housing 70. The force applied by the second elastic element 68 to the brim 66 is also greater than the force applied by the pin 33 to the valve member 60 when the solenoid valve 100 is powered on. In this embodiment, the force applied by the second elastic element 68 to the brim 66 is greater than or equal to the sum of the force applied by the pin 33 through the sealing gasket 41 to the valve element 60 when the solenoid valve 100 is powered on and the force applied by the first elastic element 32 on the valve element 60 when the solenoid valve 100 is powered on. Therefore, when the solenoid valve is powered, the valve member 60 can also be confined within valve housing 70.

The solenoid valve 100 further includes a sealing element 75, which is disposed in the cap body 60a. In this embodiment, the sealing element 75 is a sealing ring and is provided on the connecting plate 62. It can be understood that the sealing element 75 can also be a gasket spring, etc., and this application does not limit this. The sealing element 75 is used to seal the gap between the valve member 60 and the valve housing 70. Specifically, the valve housing 70 further includes an annular limiting portion 73 that extends axially from the axial end plate 71 and is accommodated in the cap body 60a, and is sealed against the cap body 60a through the sealing element 75 in a sealed state. In this embodiment, the limiting portion 73 extends axially from the second end face 71b of the axial end plate 71. The limiting portion 73 is in a sealed state against the connection plate 62 of the cap body 60a via the sealing element 75. Therefore, the present application can prevent the working fluid from flowing out of the accommodating chamber 67 through the gap between the limiting portion 73 and the cap body 60a and the gap between the brim 66 and the axial end plate 71.

The solenoid valve 100 further includes a main valve, which includes a main valve seat 80 and an open-close section 90. The main valve seat 80 is pressed into and fixed to the open axial end of the valve housing 70 in a roughly sealed state. A passage 81 is formed on the main valve seat 80 that runs through along the axial direction. The open-close section 90 can perform axial reciprocating motion within the valve housing 70 and come into contact or separate from the main valve seat 80 to achieve the opening and closing of the main valve. When the open-close section 90 comes into contact with the main valve seat 80, the main valve is in a closed state, and the working fluid cannot flow out of the solenoid valve 100 through the gap between the open-close section 90 and the main valve seat 80. When the open-close section 90 is separated from the main valve seat 80, the main valve is in an open state, and the working fluid can flow out of the solenoid valve 100 through the gap between the open-close section 90 and the main valve seat 80. In this embodiment, the second elastic element 68 is pressed against the brim 66 and open-close section 90 in a compressed state. The open-close section 90 can automatically come into contact with or separate from the main valve seat 80 according to the pressure of the working fluid in the passage 81, thereby opening and closing the main valve. When the intensity of pressure of the working fluid at the passage 81 is high, the open-close section 90 compresses the second elastic element 68, causing the open-close section 90 to separate from the main valve seat 80, so that the main valve opens. When the intensity of pressure of the working fluid at the passage 81 is low, the second elastic element 68 presses against the open-close section 90, causing the open-close section 90 to come into contact with the main valve seat 80, so that the main valve is closed.

A detailed description of the working process of the solenoid valve 100 is given below:
When the solenoid valve 100 is powered on, the movable spool 31 moves toward the cover 15, driving the pin 33 to compress the first elastic element 32 and driving the sealing gasket 41 fixed to the pin 33 toward the valve member 60 until the sealing gasket 41 abuts against the valve member 60. Since the force applied by the second elastic element 68 to the brim 66 is greater than or equal to the sum of the force applied by the pin 33 to the valve member 60 through the sealing gasket 41 and the force applied by the first elastic element 32 to the valve member 60 when the solenoid valve 100 is energized, the valve member 60 can be confined within the valve housing 70 by the second elastic element 68, so that the sealing gasket 41 blocks the fluid-passing hole 63. At this point, the working fluid cannot flow out of the solenoid valve 100 through the fluid-passing hole 63 and the through hole 72. Instead, the working fluid can pass through the gap between the open-close section 90 and the main valve seat 80 when the main valve is opened.

Referring to Figures 3, 4, 7, and 8, when the solenoid valve 100 is powered off, under the reset force of the first elastic element 32, the pin 33 drives the sealing gasket 41 fixed to the pin 33 to move axially away from the valve member 60, thereby opening the fluid passage 63. Since the force applied by the second elastic element 68 to the brim 66 is greater than the force applied by the first elastic element 32 to the valve member 60 when the solenoid valve 100 is not energized, the valve member 60 can be confined by the second elastic element 68 within the valve housing 70, preventing the working fluid from flowing out of the valve member 60 through the gap between the brim 66 of the valve member 60 and the valve housing 70. When the sealing gasket 41 moves axially away from the valve member 60 to open the fluid-passing hole 63, the pin 33 drives the movable spool 31 to move axially away from the cover 15 until the movable spool 31 resets. At this point, the pin 33 also resets. At this time, the pressurizing portion 39a can abut against the second end face 71b of the axial end plate 71 at the through hole 72, and the working fluid at the passage 81 can flow out of the solenoid valve 100 through the fluid-passing hole 63, the auxiliary groove 72b, the first cavity 76, the second cavity 77, and the third cavity 78. Meanwhile, when the main valve is open, the working fluid at the passage 81 can also flow out of solenoid valve 100 through the gap between the open-close section 90 and the main valve seat 80.

It can be understood that the valve member 60 may not necessarily be confined within the valve housing 70 by the force that the second elastic element 68 applies to the brim 66. Instead, the valve member 60 can be fixed within the valve housing 70 by an interference fit between the annual wall 61 and the limiting portion 73 of the valve housing 70. In this configuration, the valve member 60 can support the first elastic element 32, and form a support and limiting structure for the second elastic element 68 via the brim 66. This application does not impose any restrictions on this matter.

It can be understood that the solenoid valve 100 can regulate the opening/closing state and opening degree of the fluid-passing hole 63, thereby adjusting the flow rate and velocity of the working fluid entering from the passage 81 and flowing through the through hole 72, and thus adjusting the flow resistance of the working fluid, so that continuous damping control can be achieved.

It can be understood that, since the outer diameter of the pressurizing portion 39a gradually increases in the axial direction from the point where it continues from the head end 35a of the rod 35, the space between the pressurizing portion 39a and the inner wall 72a changes when the distance between the pressurizing portion 39a and the axial end plate 71 varies. Accordingly, the solenoid valve 100 can also regulate the flow rate and velocity of the working fluid entering from the passage 81 and passing through the through hole 72 by controlling the distance between the pressurizing portion 39a and the axial end plate 71, thereby adjusting the flow resistance of the working fluid and thus achieving continuous damping control.

Another embodiment of the present application further provides a shock absorber. The shock absorber includes the aforementioned solenoid valve 100. In the shock absorber, the solenoid valve 100 is fluidly connected between two fluid chambers of the shock absorber. For example, one of the fluid chambers is connected to passage 81 of solenoid valve 100, and the working fluid flowing out of solenoid valve 100 can flow into the other fluid chamber. The shock absorber can control the flow resistance and flow speed of the working fluid between the two fluid chambers by means of the solenoid valve 100, thereby realizing continuous damping control.

It should be noted that the preferred embodiments of the present application are given in the specification and drawings of the present application. However, the present application can be implemented in many different forms and is not limited to the embodiments described in the specification. These embodiments are not intended to serve as additional limitations on the contents of the present application. The purpose of providing these embodiments is to make the understanding of the disclosed contents of the present application more thorough and comprehensive. Moreover, the above-mentioned technical features are further combined with each other to form various embodiments not listed above, which are all deemed to be within the scope of the present application specification. Further, it is obvious to a person skilled in the art that improvements or changes can be made based on the above description, and all such improvements and changes should fall within the scope of protection of the claims attached to the present application.

## Claims

1. A solenoid valve comprising a movable spool (31) capable of axial reciprocating motion and a first elastic element (32) for resetting the movable spool (31) when the solenoid valve is not energized, **characterized in that** the solenoid valve further comprises:
a pin (33) connected to the movable spool (31), capable of axial reciprocating motion with the movable spool (31), and having the function of a valve core, the pin (33) comprises a rod (35) which is disposed in the axial direction and a pin head (34) extending from the rod; the rod (35) comprises a tail end (35b) connected to the movable spool (31), and a head end (35a) connected to the pin head (34), the pin head (34) comprises a pressurizing portion (39a) whose outer diameter gradually increases along the axial direction from where it continues from the head end (35a) of rod; and
a valve housing (70) with one axial end open and the other axial end closed and accommodating the pin head (34), the valve housing (70) comprises an axial end plate (71), the axial end plate (71) comprises a through hole (72) extending axially and penetrates the axial end plate (71), and for allowing the rod (35) to pass through; an inner wall (72a) defining the through hole (72) and having a diameter less than or equal to the maximum outer diameter of the pressurizing portion (39a), and an auxiliary groove (72b) formed on the inner wall (72a) and extending axially through the axial end plate (71) and communicating with the through hole (72) to allow the working fluid to flow between the pressurizing portion (39a) and the axial end plate (71) when the pressurizing portion (39a) is in contact with the axial end plate (71).

2. The solenoid valve according to claim 1, **characterized in that** the cross section of the auxiliary groove (72b) is arc-shaped, rectangular or polygonal.

3. The solenoid valve according to claim 1, **characterized in that** the axial end plate (71) further comprises a first end face (71a) and a second end face (71b) opposite to the first end face (71a), the first end face (71a) is closer to the movable spool (31) than the second end face (71b), the axial end plate (71) further comprises a first cavity (76) which is formed by axially recessing from the first end face (71a) and surrounds the through hole (72) and the auxiliary groove (72b), the first cavity (76) is in communication with the through hole (72) and the auxiliary groove (72b).

4. The solenoid valve according to claim 3, **characterized in that** the valve housing (70) further comprises a ring wall (74) extending axially from an edge of the axial end plate (71), and the axial end plate (71) further comprises a second cavity (77) extending radially outward from the first end face (71a) and a third cavity (78) extending axially along an outer peripheral surface of the ring wall (74), the second cavity (77) is in communication with the first cavity (76), and the third cavity (78) is in communication with the second cavity (77).

5. The solenoid valve according to claim 1, **characterized in that** the diameter of the head end (35a) of the rod (35) is smaller than the diameter of the tail end (35b) of the rod (35), and the axial length of the head end (35a) of the rod (35) is greater than the axial length of the inner wall (72a).

6. The solenoid valve according to claim 1, **characterized in that** the solenoid valve further comprises a valve member (60) with a valve-seat function accommodated in the valve housing (70), the valve member (60) comprises a cap body (60a), which has an open end and accommodates the pin head (34), and a brim (66) which extends radially outward around the opening of the cap body (60a) and is continuous with the cap body (60a), the opening of the cap body (60a) facing the through hole (72); and solenoid valve further comprises a second elastic element (68) which abuts against the brim (66) in a compressed state, so that the brim (66) is axially pressed against the axial end plate (71).

7. The solenoid valve according to claim 6, **characterized in that** the force applied by the second elastic element (68) to the brim (66) is greater than the force applied by the pin (33) to the valve member (60) when the solenoid valve is powered on.

8. The solenoid valve according to claim 6, **characterized in that** the solenoid valve further comprises a connection part (36) which is continuous with the pressurizing portion (39a) and has a reduced outer diameter from the continuation of the pressurizing portion (39a), the pressurizing portion (39a) forms a shoulder (39) at the connection position between the pressurizing portion (39a) and the connection part (36), two ends of the first elastic element (32) respectively abut against the shoulder (39) and the valve member (60), and the force applied by the first elastic element (32) to the valve member (60) is smaller than the force applied by the second elastic element (68) to the brim (66).

9. The solenoid valve according to claim 6, **characterized in that** the solenoid valve further comprises a sealing element (75), and the valve housing (70) further comprises an annular limiting portion (73) that extends axially from the axial end plate (71), is accommodated in the cap body (60a), and abuts against the cap body (60a) in a sealed state via the sealing element (75); the limiting portion (73) and the cap body (60a) together form an accommodating space for accommodating the pin head (34).

10. A shock absorber, **characterized in that** the shock absorber comprises the solenoid valve according to any one of the preceding claims.
